# EUROPEAN PATENT SPECIFICATION

(11) **EP 1 543 659 B1**
(45) Date of publication and mention of the grant of the patent: **24.07.2013**
(21) Application number: 03748473.0
(22) Date of filing: 25.09.2003
(51) Int. Cl.: H04W 28/24, H04L 29/08, H04L 12/70

(54) **SERVICE LEVEL ALLOCATION FOR IP NETWORKS**
ZUTEILUNG AUF DIENSTEBENE FÜR IP-NETZWERKE
ATTRIBUTION DE NIVEAU DE SERVICE POUR R SEAUX IP

(30) Priority: 27.09.2002 US 256018
(43) Date of publication of application: 22.06.2005
(73) Proprietor: Nokia Siemens Networks Oy, 02610 Espoo (FI)
(72) Inventor: CUNY, Renaud, FIN-02280 Espoo (FI); AHVONEN, Kati, FIN-00200 Helsinki (FI); HONKASALO, Zhi-Chun, FIN-02700 Kauniainen (FI); LI, Man, Bedford, MA 01730 (US)
(74) Representative: Borgström, Markus
(86) International application number: PCT/IB2003/004565
(87) International publication number: WO 2004/030289

(56) References cited:
- EP-A2- 1 059 792
- US-A1- 2003 036 983
- US-B1- 6 563 835
- US-B1- 6 618 591

## Description

### FIELD OF THE INVENTION

The present invention relates to the control of the provision of service levels in Internet protocol (IP) networks, and particularly but not exclusively in IP networks connected to a mobile telecommunications network such as a universal mobile telecommunications service (UMTS) network.

### BACKGROUND OF THE INVENTION

Packet switched mobile telecommunication networks provide an interface between mobile stations and Internet protocol (IP) networks. An example of such a packet switched system is the universal mobile telecommunications service (UMTS) system.

In such systems, a communication is initiated between the mobile station and an application server or another mobile station, after a packet data protocol (PDP) context has been established between the mobile station and UMTS network. In current systems, after a PDP context is established, a quality of service (QoS) is applied in the UMTS domain based on a QoS requested by the mobile station (more generally known as user equipment). When requesting a QoS profile, a mobile station sends a PDP context activation request to the serving GPRS support node (SGSN) of the UMTS network. The SGSN then checks if the users subscription allows this level of QoS. If the users subscription does support this level of QoS, and sufficient resources are available in the network (determined by the GGSN), the PDP context is activated. Activation of the PDP context requires resources to be available in the SGSN, the gateway GPRS support node (GGSN), and the radio interface (radio access bearers).

Third generation mobile services are expected to offer access to certain servers that reside inside IP networks, i.e. which are external to the mobile communication network. The mobile communication network administrative domain (in the UMTS domain) and the external IP network administrative domain may establish service level agreements (SLA) and service level specifications (SLS) there between. For example, an agreement may specify that downlink traffic going to the GGSN and marked with AF23 should be treated as interactive.

There may further exist service level agreements and service level specifications between any external IP network and service providers which interface therewith. An example could be that traffic coming from a particular IP source having a specific source port and entering the IP network provider domain should be treated as streaming traffic.

Where services offer access to servers external to the mobile communications network, this potentially creates problems for any agreements or specifications set between the mobile communication network and the external servers, 1 as currently the quality of service set for a communication session is determined only by the ability of the communication system itself to support such session.

US2003/0036983 discloses filtering and gating data in pachet data networks using policy mechanisms. It rates to QoS management functions for controlling UMTS bearer services and PDP context messages for sending QoS profiles.

It is an object of the present invention to provide an improved technique for specifying service levels in packet switched networks, which addresses one or all of the above stated problems.

### SUMMARY OF THE INVENTION

According to the present invention there is provided a method of controlling service level requirements between a communication network and a user equipment associated with an end-user connected in the communication network, the user equipment being arranged to communicate with an external service provides via the communication network, the method being as defined in claim 1.

The end-user service level may be determined in further dependence on a service level requested by the user equipment.

The end-user service level may be determined in further dependence on the availability of resources in the communication network.

The availability of resources in the communication network and the service level requested by the user equipment preferably determine an initial service level for the user equipment.

The initial service level and the agreed service level preferably determine a modified service level for the user equipment.

The end-user service level may be modified in dependence on the requested service level being outside the range of the agreed service level.

The service level is preferably a quality of service level.

The determined service level specification may set a service level in dependence upon flow characteristics of data from the user equipment.

The external service provider may be associated with an IP network. The communication network may be a UMTS network. The service level requirement may be defined by a PDP context.

The communication network may include a serving GPRS support node (SGSN) and a gateway GPRS support node (GGSN), wherein the initial service level is determined by the SGSN and the GGSN.

The initial service level may be determined based on a PDP context request.

The modification of the initial service level may be responsive to a PDP context modification.

According to a further aspect of the invention there is provided a network element for controlling service level requirements between a user equipment associated with an and user and a communication network, wherein the user equipment is connected in the communication network and is arranged to communicate with an external service provider via the communication network, the network element being as defined in Claim 12.

The network element may be a gateway GPRS support node (GGSN), the communication network further comprising a serving GPRS support node (SGSN). The GGSN may be connected to an external data network and the SGSN. The SGSN may be connected to the user equipment.

According to a still further aspect of the present invention there is provided a communication architecture as defined in claim 29.

The invention thus proposes a generic method to be implemented in the GGSN that checks potential service level specifications between a UMTS administrative domain and an external IP network administrative domain. The invention also provides for checking potential service level specifications between an external IP administrative domain (controlled by the UMTS operator) and service providers.

The inventive procedure allows full consistency checking between the quality of service requested by the user equipment (and applied in the UMTS domain) and of the quality of service applied in the external IP network. If a service level specification is agreed between the UMTS domain and an external IP network domain, or between the external IP network (controlled by the UMTS operator) and a service provider, a GGSN is required to check that the UMTS quality of service profile in the UMTS domain is in line with the respective SLS agreements. In a preferred embodiment, the user equipment activates a PDP context. The GGSN attempts to identify the flow of such context in order to map it to a certain service level specification. If the GGSN identifies the flow, GGSN then compares the UMTS quality of service profile sent by the user equipment to the service level specification quality of service profile that this flow refers to. If mismatches are found between the two profiles, GGSN will update the PDP context and propose an adequate quality of service profile to the user equipment. The user equipment can accept or reject this new profile. If the user equipment rejects the new profile, then the user equipment must deactivate the PDP context. Thereafter it is possible - but not mandatory - to activate a new PDP context.

The present invention thus allows the GGSN to enforce quality of service in the UMTS domain based on service level specifications. It ensures that the quality of service applied inside the UMTS domain does not contradict the service level specification agreed with other parties (either an external IP network domain or a service provider).

### BRIEF DESCRIPTION OF THE DRAWINGS

For a better understanding of the present invention and as to how the same can be carried into effect, reference will now be made by way of example to the accompanying drawings in which:
Figure 1 illustrates schematically a packet switched mobile communication system in which the present invention may be utilized;
Figure 2 illustrates a known PDP context activation procedure;
Figures 3 illustrates an implementation of the GGSN in accordance with preferred embodiments of the present invention;
Figure 4 illustrates a PDP context modification procedure in accordance with a first embodiment of the present invention;
Figure 5 illustrates the method steps in a first embodiment of the PDP context modification according to Figure 4; and
Figure 6 illustrates the method steps in a second embodiment of the present invention.

### DESCRIPTION OF THE PREFERRED EMBODIMENTS

The present invention is now described by way of reference to a particular non-limiting example, and in particular by way of reference to a universal mobile telecommunication services (UMTS) network connected to an Internet protocol (IP) network. However the choice of communication system is for illustrative purposes only. The invention is applicable to any packet switched communication network which has connections with external servers, and in which there is established a service level between a user and a packet switched network.

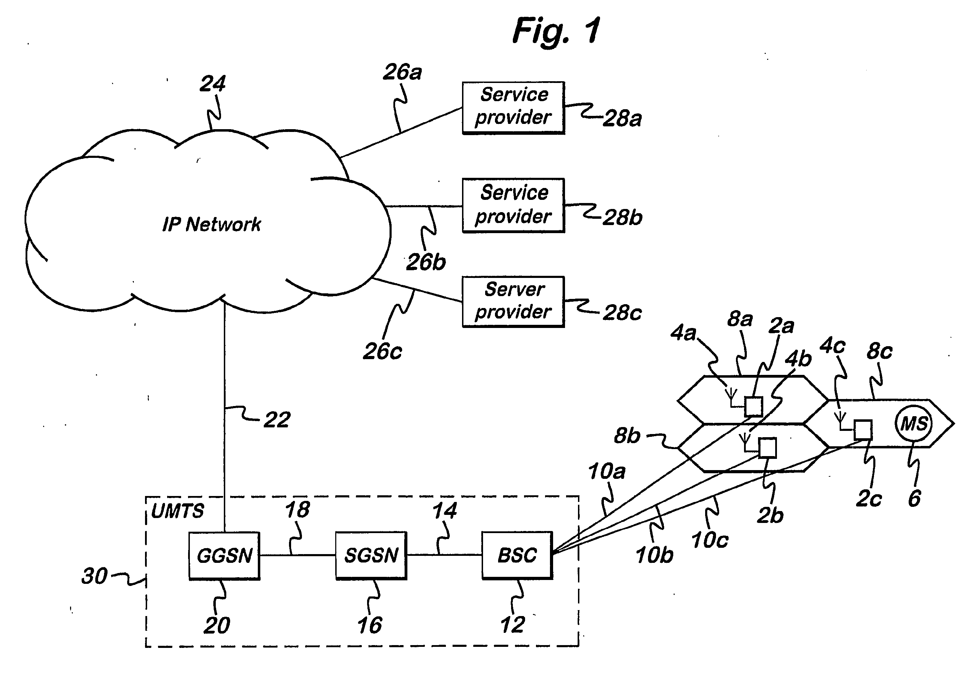

Referring to Figure 1, there are illustrated schematically a packet switched mobile communication system in which a preferred embodiment of the present invention may be implemented.

Referring to Figure 1, there is illustrated three cells 8a, 8b, 8c of a cellular structure. Each cell is defined by a radio coverage of a respective base transceiver station (BTS) 2a, 2b, 2c. Each base transceiver station is associated with a respective antenna 4a, 4b, 4c. A roaming mobile station (MS) 6, more generally referred to as user equipment (UE), is shown in cell 8c. In practice, many roaming mobile stations will be present throughout a cellular structure.

The base transceiver stations 2a, 2b, 2c are connected into the network infrastructure of the UMTS system via respective connections 10a, 10b, 10c of base station controller (BSC) 12.

The structure and implementation of a packet switched UMTS system are well-known in the art, and are not discussed in detail herein. Figure 1 shows the main elements of a UMTS system 30 necessary for an understanding of the present invention. The base station controller (BSC) 12 is connected to a serving GPRS support node (SGSN) 16 via communication link 14. The SGSN 16 is connected to a gateway GPRS support node (GGSN) 20 via a communication link 18. The GGSN 20 is connected to an IP network 24 via a communication link 22. In practice, GGSN 20 may be connected to more than one IP network.

The IP network 24 is preferably a network independent of the UMTS network, but which is controlled by the operator of the UMTS system.

In embodiments, the invention requires, as will be described further hereinbelow, that either the GGSN or an associated external policy server (discussed below) is aware of the service location specification (SLS) QoS and its mapping to a particular IP flow. In an embodiment there is an assumption that if there is an SLS between a third party service provider and the IP network provider, then the GGSN (or the policy server) may not be aware of the SLS QoS unless the IP network is under the administration of the UMTS network provider. However, it is not essential that the UMTS network and the IP service provider are under the same administration. The only requirement is that the SLS QoS information is available in the GGSN (or the policy server). However it is outside the scope of the present invention as to how this information is made available.

Further referring to Figure 1, the IP network 24 is further connected to various service providers. In Figure 1, the IP network 24 is shown as connected to three service providers 28a, 28b, 28c via communication links 26a, 26b, 26c. Various service providers provide services to users of the UMTS system, i.e. users associated with user equipment such as mobile station 6.

The UMTS network, the infrastructure of which is generally designated by reference numeral 30 in Figure 1, may establish a service level agreement (SLA) and a service level specification (SLS) with the IP network 24. Several such agreements and specifications may be established between the UMTS system and the IP network 24. More specifically, in a preferred embodiment the UMTS network and the IP network may agree different service level specifications to be associated with different data packet flows. Thus the UMTS network and the IP network may agree a service level specification for each particular type of packet flow. However it is not always possible to make flow based SLSs; they may be sometimes only aggregate based.

In addition, the UMTS network may similarly agree service level agreements and service level specifications with various service providers 28a-28c. Such service level specifications, in a preferred embodiment of the present invention, are similarly related to the type of packet flow in a communication session.

It should also be noted that UMTS network 30 may be associated with more than one IP network, and service level agreements and service level specifications may be established with more than one IP network. Similarly service level agreements and service level specifications may be associated with service providers associated with other IP networks.

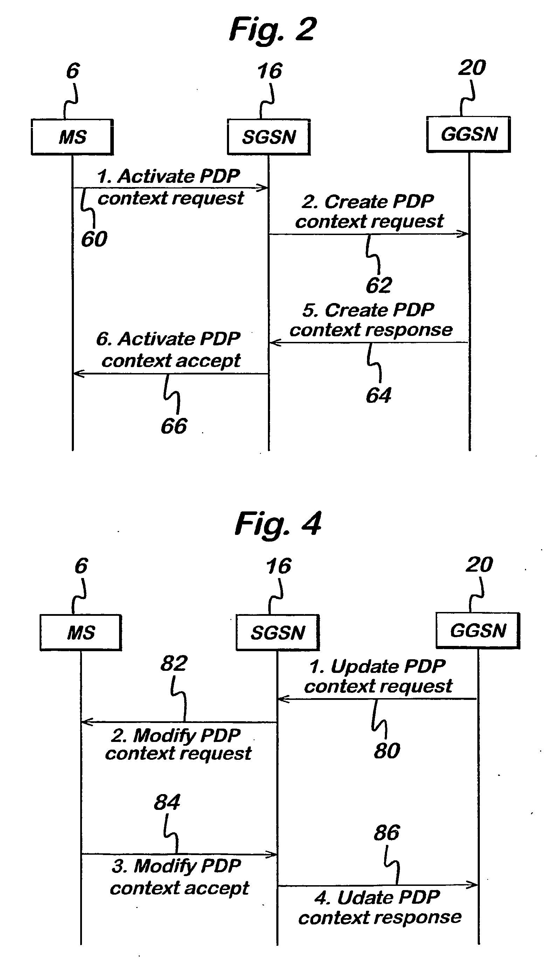

A preferred embodiment of the present invention is now described further with reference to Figures 2-5.

Referring to Figure 2, a normal PDP context activation in accordance with known standards is illustrated. An end user, which is the user associated with mobile station 6 in Figure 1, initiates a 3G service. The MS 6 activates a PDP context request 60 to the SGSN 16. The SGSN 16 checks its own internal resources and the Iu interface between the radio access network (RAN) and the SGSN to ensure that the desired quality-of-service for the PDP context can be supported. Responsive thereto, the SGSN sends a create PDP context request to the GGSN 20.

The PDP context request received by the GGSN 20 includes an identification of the quality of service profile requested by the MS 6. The GGSN 20 determines if there are sufficient resources in the UMTS network to support this QoS, by checking its own internal resources and the interface between the SGSN and the GGSN. This involves ensuring there is sufficient resources associated with the SGSN 16, the GGSN 20, and the radio interface. The GGSN 20 then returns a create PDP context response 64 to the SGSN 16. The SGSN 16 then returns an activate PDP context accept 66 to the MS 6. This establishment of the PDP context is in accordance with current standard procedures.

Once the PDP context is established in accordance with current standards (_3GGP 23.060), the standards specified in the GGSN 20 can initiate a modification procedure of the PDP context. Modification of the PDP context in accordance with the preferred embodiments of the present invention is now described.

In a preferred embodiment, as mentioned hereinabove, the service level specification agreed between the UMTS network and the IP network or associated service providers is based upon the packet flow of the session. Certain service level specifications are defined to be associated with certain types of packet flow.

The GGSN 20 may identify the flow related to a particular service level specification that it receives in the create PDP context message 62 from the SGSN 16 during the normal PDP context activation procedure as shown in Figure 2.

A preferred embodiment of the present invention identifies the flow of the communication session during the secondary PDP context activation. During the secondary PDP context activation procedure, user equipment sends to the GGSN 20 a traffic flow template (TFT) information. The TFT is a set of filters, specified in 23.060 (3GPP technical specification 23.060: General Packet Radio Service (GPRS); Service description; Stage 2, 3GPP TSG SA, v.x.x.x, 2002), as follows

Each valid packet filter contains a unique identifier within a given TFT, an evaluation precedence index that is unique within all TFTs for one PDP address, and at least one of the following attributes:
- Source Address and Subnet Mask.
- Protocol Number (IPv4)/ Next Header (IPv6).
- Destination Port Range.
- Source Port Range.
- IPSec Security Parameter Index (SPI).
- Type of Service (TOS) (IPv4) / Traffic class (IPv6) and Mask.
- Flow Label (IPv6).

The principle of the preferred embodiment of the present invention is to use the information set in the TFT in order to identify the flow within the service level specification agreed. The flow identification in a service level specification may be performed using the following information:
- DSCP value
- Source information (Source address, set of source address, source prefix, set of source prefix)
- Destination information (Destination address, set of destination address, destination prefix, set of destination prefix)
- Application information (protocol number, protocol number and source port/destination port).

Thus it is possible, using the information set in the TFT, to identify a flow and therefore map it to a certain service level specification.

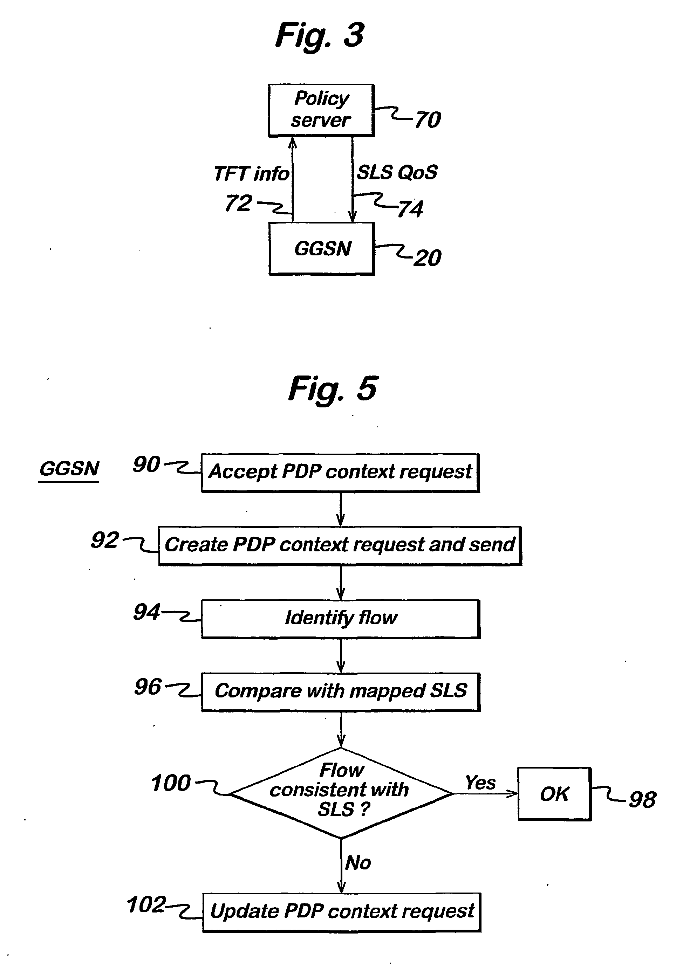

The information that relates to service level specifications agreed between the different parties, i.e. the flow identifiers and the associated quality of service profiles, may or may not reside in the GGSN 20. The specific implementation of where this information is held is outside the scope of the present invention. However, referring to Figure 3, there are described two possible implementations.

In one possible implementation, the service level specification information is stored in the GGSN 20 itself. Referring to Figure 3, there is illustrated a case where the service level specification'is stored outside of the GGSN 20, for example in a policy server 70. The TFT information received by the GGSN is provided on a line 72 to the policy server 70, and the policy server 70 responsive thereto returns the service level specification quality of service associated with the TFT information to the GGSN 20. In either scenario, the service level specification and quality of service information are only available if the TFT information is identified, i.e. the packet flow is mapped to a service level specification.

In accordance with the present invention, if a service level specification agreed quality of service profile is in contradiction with the UMTS quality of service profile agreed between the UMTS network and the mobile station, then the GGSN 20 proposes a new UMTS quality of service profile.

A more detailed implementation of this embodiment of the present invention will now be described with reference to Figures 4 and 5.

Referring to step 90 of Figure 5, in the first step the GGSN 20 accepts the PDP context requested by the user equipment, responsive to the signal 62 in Figure 2. At this stage the GGSN does not consider any modification of the PDP context based on service level specifications. In step 92, the GGSN creates a PDP context request and sends this to the SGSN 16, as represented by message 64 in Figure 2.In step 94, GGSN 20 identifies the flow of the packet session associated with the PDP context. As discussed in relation to Figure 3 above, this is carried out internally within the GGSN or by the GGSN accessing information from an external block.

In step 96, the GGSN compares the quality of service profile associated with the service level specification related to the flow, and determines whether it is consistent with the equality of service specification agreed between the UMTS network and the mobile station during the initial PDP context establishment.

If, in a step 100, it is determined that the flow quality of service is consistent with the service level specification quality of service, and there is no requirement to consider modification of the PDP context, then the PDP context is determined to be okay (step 98).

If the quality of service of the service level specification is not consistent with that agreed between the UMTS network and the mobile station, step 100, then the GGSN modifies the already agreed PDP context.

Thus, in a step 102, some short time after establishment of the PDP context the GGSN sends an update PDP context request to the SGSN, as represented by message 80 in Figure 4. This request is sent in order to modify the already activated PDP context. This message 80 contains the new quality of service profile that results from the decision made in step 100.

The SGSN 16 generates a modified PDP context request message 82 to the mobile station 6 responsive to receipt of the message 80. This update procedure follows the update procedure specified in GSM 23.060 (see above for full reference). The SGSN may restrict the quality of service based on its capabilities, current load, or the subscribed quality of service profile. That is, the SGSN may further restrict the quality of service identified by the GGSN 20 in relation to the resources available between the UMTS network and the mobile station. Only then does the SGSN 16 send the modified PDP context request message 82. Mobile station 6 then must make a decision, in accordance with standardized procedures, as to whether to accept the updated PDP context or reject it. In the event that the mobile station 6 determines to accept the modified PDP context, the modified PDP context accept message 84 is transmitted to the SGSN 16. Then, the SGSN 16 transits an update PDP context response message 86 to the GGSN 20.

If the user equipment does not accept the new quality of service profile proposed by the GGSN 20, then the mobile station 6 must deactivate the PDP context.

Thus, in the preferred embodiment a new quality of service profile is proposed by the GGSN 20 only in cases where it is clear that the user equipment should not be allowed to use the UMTS quality of service profile which it has requested, because of a contradiction with the service level specification.

Given this embodiment, if the flow of the packet session cannot be identified, or if there is no service level specification quality of service associated with identified flow, then the GGSN 20 takes no action to check or modify the established PDP context, and the, procedure continues as normal. Thus the invention advantageously provides the use of an extra service level specification to determine the quality of service level profile.

In an example, the user equipment may ask for a streaming UMTS quality of service profile, although it is using a service treated as background traffic in the external IP network.. Once the flow is identified by the GGSN 20, and mapped to a specific service level specification, it is identified that according to the service level specification, this flow should be treated as background and not streaming. After the requested PDP context has been successfully set up, the GGSN 20 sends an update PDP context request to the SGSN 16, which in turn sends a modified PDP context request to the user equipment. User equipment then accepts or rejects the proposed quality of service. If the user equipment rejects the proposed profile, it deactivates the PDP context.

The GGSN 20 accepts the PDP context request in step 90 of Figure 5, before considering any modification to the PDP context. However alternative implementations may be possible.

In an alternative, GGSN 20 may identify the flow and perform the comparison of steps 94 to 100 prior to accepting the initial PDP request. If the GGSN 20 operated in this way, and if the flow was not consistent with the service level specification, it would be necessary to reject the PDP request, thus canceling the PDP context activation procedure. GGSN 20 would then itself activate a new PDP context with the correct quality of service profile. Such a network initiated PDP context activation procedure is only specified for primary PDP context. It is therefore not suitable for the preferred embodiment of the invention where secondary PDP contexts are utilized.

In a second alternative, the PDP request could be accepted in a modified quality of service profile. However, the SGSN 16 would then need to check if the modified quality of service profile is acceptable according to the user subscription definition. Such a step may require modification to the standardized procedures, and would therefore not be an ideal proposal.

Although the present invention has been described in relation to a preferred embodiment where TFT in secondary PDP contexts are used in order to identify the flow, the invention is not limited to such a specific arrangement in its general applicability. Any-technique may be used which enables the packet session to be identified and correlated with agreed service level specifications.

Further, although in preferred embodiments an identification of the flow is preferably made in the secondary PDP contexts, in an alternative, where for example it is not possible to identify the flow (i.e. map it to a certain SLS) during secondary PDP context activation, in a further embodiment of the present invention it may be identified later when the first downlink packet is received by the GGSN.

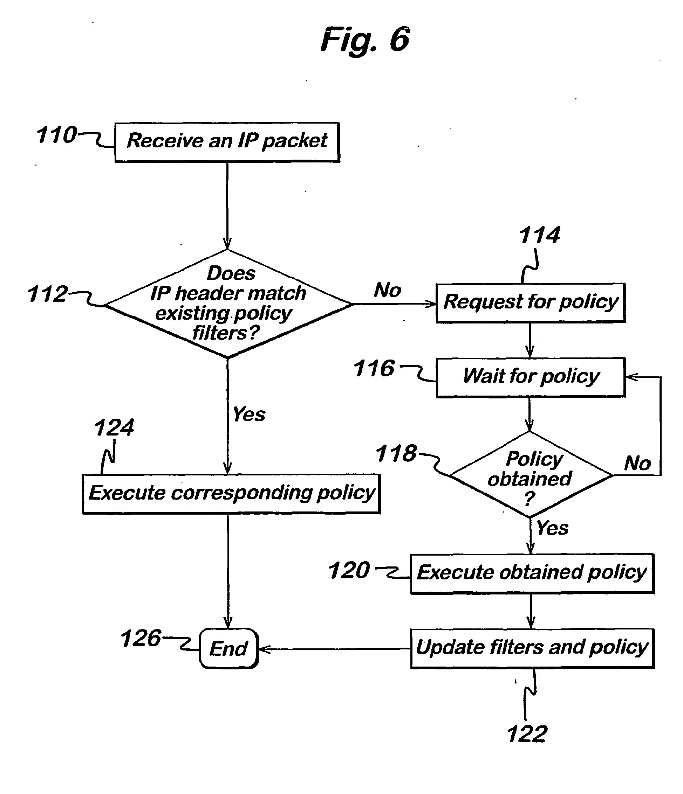

The general principles of this embodiment of the present invention, based on a first downlink packet, are described hereinafter with reference to Figure 6, followed by a specific example.

Referring to Figure 6, it is assumed that a PDP context has been established, and an IP packet is received at the GGSN in a step 110. In a step 112, the GGSN then checks to ensure that the IP header of the received IP packet is consistent with existing policy filters. Specifically, the GGSN is configured in accordance with the established PDP context to support an agreed quality of service. On receiving the IP packet, the GGSN utilizes information in the IP header which identifies the type of packet. The GGSN uses this identity of the packet to determine if the quality of service agreed in establishing the PDP context is consistent with the quality of service agreed for this type of packet with the external service provider.

If the GGSN determines that the quality of service is consistent, and the IP packet header parameters match the configured policy filters set in the GGSN, then in a step 124 the policy is executed for the transmission of the packets. The transmission continues until in a step 126 the packet transmission ends.

However, if in step 112 the GGSN determines that the IP packet headers are not consistent with the existing GGSN policy filters, in a step 114 the GGSN requests a policy from the policy server. The GGSN then waits to be advised of an appropriate policy (in step 116), and enters a wait cycle in step 118. Once a policy is obtained in step 120, the obtained policy is executed. The filters and policy information are then updated in the GGSN. This may involve initiating a PDP context modification. Thereafter, the transmission continues until in a step 126 the packet transmission ends.

This embodiment of the invention therefore provides a technique in which an element of the mobile network, such as the GGSN, detects activation of a new IP service and associated traffic, and if necessary requests quality of service authorisation for the service/traffic. As such, the network is able to detect that the service has been created and traffic is entering the network, and modify, and/or activate, PDP contexts as needed.

The use of a downlink packet to identify the flow and ensure consistent quality of service is now described by way of an example. It should be noted that this technique may be used where it is not possible to ensure consistency of quality of service requests during PDP context activations, for example where a flow cannot be identified as mentioned hereinabove. However, it is also applicable generally as a technique for ensuring consistency of quality of service levels requested. The technique may be advantageously used to identify IP flows added to an existing PDP context.

For the purposes of this example it is assumed that a PDP context has first been established between the user equipment and the GGSN 20.

It is assumed, for this example, that an operator has a service level agreement (SLA) with one content service provider that the HTTP traffic for that content service provider should be handled as AF2 traffic (interactive class with traffic handling priority 2), and FTP traffic should be handled as best-effort (background), unless a user specifically selects THP 2 in their subscription. This policy applies to all users using the sites of the content service provider.

For the purposes of this example it is assumed that there is provided a policy server, such as policy server 70 in Figure 3. Within the service level specification (SLS), the policy server and the content service provider agree on a classification policy, including the classification filter parameters for HTTP and FTP, herein denoted as filter A and filter B.

The PDP context created by the UE is for HTTP traffic. As a result, filter A and a corresponding QoS policy is installed at the GGSN when a GTP tunnel is created for the PDP context, following PDP context activation.

Thereafter, the UE may activate access to a server of the content provider with a FTP request. The traffic comes into the GGSN, and the GGSN detects a mismatch, since the existing filter A is for HTTP traffic only. Responsive to detection of this mismatch, a policy request is triggered by the GGSN 20 to the policy control server 70. The GGSN 20 does not forward any packets pending a response to the policy request, so that the flow will not progress. This is necessary, as the GGSN has no means to buffer large amounts of user traffic.

The policy control server 70 receives the policy request with the relevant flow identification information, in this embodiment based on Diffserv classification filter parameters. The policy server 70 then makes a new policy decision based on this information, and provides said new decision to the GGSN. The new policy decision includes the QoS treatment for the particular flow, which in this embodiment includes marking the DSCP as 0 (best effort) and applying filter B.

It is assumed that the GGSN has already been configured by a policy manager such that it knows the rules of how to map a QoS treatment to an associated QoS profile. The GGSN will participate in a PDP context re-negotiation, taking as the associated QoS profile for the modified PDP context the authorised profile for the PDP context that will carry the IP flow. In this specific example, the PDP context is downgraded to background class. Alternatively, the GGSN may request a second PDP context setup from the UE.

A similar approach may be taken in implementing SLAs with a streaming server, where the GGSN will be provided with a policy that the UDP traffic of a given port range from a given IP address should be mapped as AF4. In this way, if the on-going PDP context associates with, for example, interactive or background class, then the GGSN will detect the mismatch in policy when it cannot find a matching filter for the streaming traffic. This then triggers a policy request from the policy control entity, i.e. the policy server.

Although the above examples are given in relation to triggering a policy request in the downlink direction, the same principles can also work for uplink direction policy control.

The embodiments of the present invention generally ensure that the PDP context activation as well as quality of service profile negotiation result are in line with the service level objectives agreed with the customer beforehand. This is achieved, in embodiments, by classifying IP traffic according to policy when the IP service is created.

Furthermore the present invention has been described herein with specific reference to an arrangement where the quality of service level is modified. The invention may equally apply to modification of other service characteristics which are agreed between the communications network and the user, and between the communication network and external networks.

Modifications and adaptations to the embodiments of the present invention described herein will be apparent to one skilled in the art. The present invention is more generally applicable than that given herein with relation to the preferred embodiments. The scope of the present invention is defined by the appended claims.

## Claims

1. A method of controlling service level requirements between a communication network (30) and a user equipment (6) associated with an end-user connected in the communication network (30), the user equipment (6) being arranged to communicate with an external service provider (28a) via the communication network (30),
**characterised by** the method comprising determining the end-user service level between the communication network (30) and the user equipment (6) in dependence on a service level specification determined by the communication network (30) and the external service provider (28a).

2. A method according to claim 1 wherein the end-user service level is determined in further dependence on a service level requested by the user equipment (6).

3. A method according to claim 2 wherein the end-user service level is determined in further dependence on the availability of resources in the communication network (30).

4. A method according to claim 3 wherein the availability of resources in the communication network (30) and the service level requested by the user equipment (6) determine an initial service level for the user equipment (6).

5. A method according to claim 4 wherein the initial service level and the agreed service level determine a modified service level for the user equipment (6).

6. A method according to claim 2 wherein the end-user service level is modified in dependence on the requested service level being outside the range of the agreed service level.

7. A method according to claim 1 wherein the service level is a quality of service level.

8. A method according to claim 1 wherein the determined service level specification sets a service level in dependence upon flow characteristics of data from the user equipment (6).

9. A method according to claim 1 wherein the external service provider (28a) is connected to an internet protocol network (24).

10. A method according to claim 1 wherein the communication network (30) comprises a universal mobile telecommunications service network.

11. A method according to claim 10 wherein the service level requirement is defined by a packet data protocol context.

12. A network element (20) for controlling service level requirements between a communication network (30) and a user equipment (6) associated with an end user connected in the communication network (30), the user equipment (6) being arranged to communicate with an external service provider (28a) via the communication network (30),
**characterised by** the network element (20) comprising:
means for determining an end user service level between the communication network (30) and the user equipment (6) in dependence on a service level specification determined by the communication network (30) and the external service provider (28a).

13. A network element (20) according to claim 12 wherein the network element comprises a gateway GPRS support node (20), the communication network (30) further comprising a serving GPRS support node (16).

14. A network element (20) according to claim 13 wherein the gateway GPRS support node (20) is connected to an external data network (24), and the serving GPRS support node (16).

15. A network element (20) according to claim 14, wherein the external data network comprises an internet protocol network (24)

16. A network element (20) according to claim 15, wherein the serving GPRS support node (16) is connected to the user equipment (6).

17. A network element (20) according to any one of claims 12 to 16, comprising means for receiving an identification of a quality of service profile requested by the user equipment (6).

18. A network element (20) according to claim 17, comprising means for determining if there are sufficient resources in the communication network (30) to support the quality of service profile requested by the user equipment (6).

19. A network element (20) according to any one of claims 12 to 18, comprising means for accepting a packet data protocol context requested by the user equipment (6).

20. A network element (20) according to claim 19, comprising means for identifying a flow of the packet session associated with the packet data protocol context.

21. A network element according to claim 20, comprising means for determining whether a quality of service profile associated with the service level specification related to the flow is consistent with a quality of service specification agreed between the communication network (30) and the user equipment (6).

22. A network element (20) according to any one of claims 12 to 21, comprising means for proposing a new quality of service profile only in cases where it is clear that the user equipment should not be allowed to use a quality of service profile which it has requested, because of a contradiction with the service level specification.

23. A network element (20) according to any one of claims 12 to 16, wherein the service level comprises a quality of service level.

24. A network element (20) according to any one of claims 12 to 23, wherein the communication network (30) comprises a universal mobile telecommunications service network.

25. A network element (20) according to any one of claims 12 to 24, wherein the service level specification is related to a type of packet flow in a communication session.

26. A network element (20) according to any one of claims 12 to 25, comprising means for receiving an identification of the service level agreed between the communication network (30) and an external data network (24).

27. A network element (20) according to claim 26, comprising means for comparing the requested and agreed service levels, wherein if the requested service level is not consistent with the agreed service level, the network element is arranged to (20) determine a new service level for the user equipment (6) within the agreed service level.

28. A network element (20) according to claim 26 or claim 27, comprising means for controlling service level requirements between the communication network (30) and the external data network (24).

29. A communication architecture comprising a communication network (30) for supporting at least one user equipment (6) associated with an end-user, and
an external service provider (28a), wherein the user equipment (6) is arranged to communicate with the external service provider (28a) via the communication network (30),
the communication network (30) further comprising a network element (20) according to any one of claims 12 to 28.

## Patentansprüche

1. Verfahren zum Steuern von Dienstniveauanforderungen zwischen einem Kommunikationsnetz (30) und einem Benutzergerät (6), das einem in dem Kommunikationsnetz (30) verbundenen Endbenutzer zugeordnet ist, wobei das Benutzergerät (6) dafür ausgelegt ist, über das Kommunikationsnetz (30) mit einem externen Dienstanbieter (28a) zu kommunizieren,
**dadurch gekennzeichnet, dass** das Verfahren das Bestimmen des Endbenutzer-Dienstniveaus zwischen dem Kommunikationsnetz (30) und dem Benutzergerät (6) in Abhängigkeit von einer durch das Kommunikationsnetz (30) und dem externen Dienstanbieter (28a) bestimmten Dienstniveauspezifikation umfasst.

2. Verfahren nach Anspruch 1, wobei das Endbenutzer-Dienstniveau in weiterer Abhängigkeit von einem von dem Benutzergerät (6) angeforderten Dienstniveau bestimmt wird.

3. Verfahren nach Anspruch 2, wobei das Endbenutzer-Dienstniveau in weiterer Abhängigkeit von der Verfügbarkeit von Betriebsmitteln in dem Kommunikationsnetz (30) bestimmt wird.

4. Verfahren nach Anspruch 3, wobei die Verfügbarkeit von Betriebsmitteln in dem Kommunikationsnetz (30) und das von dem Benutzergerät (6) angeforderte Dienstniveau ein anfängliches Dienstniveau für das Benutzergerät (6) bestimmen.

5. Verfahren nach Anspruch 4, wobei das anfängliche Dienstniveau und das vereinbarte Dienstniveau ein modifiziertes Dienstniveau für das Benutzergerät (6) bestimmen.

6. Verfahren nach Anspruch 2, wobei das Endbenutzer-Dienstniveau in Abhängigkeit davon modifiziert wird, dass das angeforderte Dienstniveau außerhalb des Bereichs des vereinbarten Dienstniveaus liegt.

7. Verfahren nach Anspruch 1, wobei das Dienstniveau ein Dienstgüteniveau ist.

8. Verfahren nach Anspruch 1, wobei die bestimmte Dienstniveauspezifikation ein Dienstniveau in Abhängigkeit von Flusskenngrößen von Daten von dem Benutzergerät (6) setzt.

9. Verfahren nach Anspruch 1, wobei der externe Dienstanbieter (28a) mit einem Internet-Protokoll-Netzwerk (24) verbunden ist.

10. Verfahren nach Anspruch 1, wobei das Kommunikationsnetz (30) ein Netz des Universal Mobile Telecommunications Service umfasst.

11. Verfahren nach Anspruch 10, wobei die Dienstniveauanforderung durch einen Kontext des Packet Data Protocol definiert wird.

12. Netzwerkelement (20) zum Steuern von Dienstniveauanforderungen zwischen einem Kommunikationsnetz (30) und einem Benutzergerät (6), das einem in dem Kommunikationsnetz (30) verbundenen Endbenutzer zugeordnet ist, wobei das Benutzergerät (6) dafür ausgelegt ist, über das Kommunikationsnetz (30) mit einem externen Dienstanbieter (28a) zu kommunizieren,
**dadurch gekennzeichnet, dass** das Netzwerkelement (20) Folgendes umfasst:
Mittel zum Bestimmen eines Endbenutzer-Dienstniveaus zwischen dem Kommunikationsnetz (30) und dem Benutzergerät (6) in Abhängigkeit von einer durch das Kommunikationsnetz (30) und den externen Dienstanbieter (28a) bestimmten Dienstniveauspezifikation.

13. Netzwerkelement (20) nach Anspruch 12, wobei das Netzwerkelement einen Gateway GPRS Support Node (20) umfasst und das Kommunikationsnetz (30) ferner einen Serving GPRS Support Node (16) umfasst.

14. Netzwerkelement (20) nach Anspruch 13, wobei der Gateway GPRS Support Node (20) mit einem externen Datennetzwerk (24) und dem Serving GPRS Support Node (16) verbunden ist.

15. Netzwerkelement (20) nach Anspruch 14, wobei das externe Datennetzwerk ein Internet-Protokoll-Netzwerk (24) umfasst.

16. Netzwerkelement (20) nach Anspruch 15, wobei der Serving GPRS Support Node (16) mit dem Benutzergerät (6) verbunden ist.

17. Netzwerkelement (20) nach einem der Ansprüche 12 bis 16, das Mittel zum Empfangen einer Identifikation eines von dem Benutzergerät (6) angeforderten Dienstgüteprofils umfasst.

18. Netzwerkelement (20) nach Anspruch 17 mit Mitteln zum Bestimmen, ob ausreichende Betriebsmittel in dem Kommunikationsnetz (30) vorliegen, um das von dem Benutzergerät (6) angeforderte Dienstgüteprofil zu unterstützen.

19. Netzwerkelement (20) nach einem der Ansprüche 12 bis 18 mit Mitteln zum Annehmen eines von dem Benutzergerät (6) angeforderten Kontexts des Packet Data Protocol.

20. Netzwerkelement (20) nach Anspruch 19 mit Mitteln zum Identifizieren eines Flusses der Paketsitzung, die dem Kontext des Packet Data Protocol zugeordnet ist.

21. Netzwerkelement nach Anspruch 20 mit Mitteln zum Bestimmen, ob ein Dienstgüteprofil, das der den Fluss betreffenden Dienstniveauspezifikation zugeordnet ist, mit einer zwischen dem Kommunikationsnetz (30) und dem Benutzergerät (6) vereinbarten Dienstgütespezifikation vereinbar ist.

22. Netzwerkelement (20) nach einem der Ansprüche 12 bis 21 mit Mitteln zum Vorschlagen eines neuen Dienstgüteprofils nur in Fällen, bei denen es klar ist, dass dem Benutzergerät aufgrund eines Widerspruchs mit der Dienstniveauspezifikation nicht erlaubt werden sollte, ein Dienstgüteprofil zu benutzen, das es angefordert hat.

23. Netzwerkelement (20) nach einem der Ansprüche 12 bis 16, wobei das Dienstniveau ein Dienstgüteniveau umfasst.

24. Netzwerkelement (20) nach einem der Ansprüche 12 bis 23, wobei das Kommunikationsnetz (30) ein Netz des Universal Mobile Telecommunications Service umfasst.

25. Netzwerkelement (20) nach einem der Ansprüche 12 bis 24, wobei die Dienstniveauspezifikation eine Art von Paketfluss in einer Kommunikationssitzung betrifft.

26. Netzwerkelement (20) nach einem der Ansprüche 12 bis 25 mit Mitteln zum Empfangen einer Identifikation des zwischen dem Kommunikationsnetz (30) und einem externen Datennetzwerk (24) vereinbarten Dienstniveaus.

27. Netzwerkelement (20) nach Anspruch 26 mit Mitteln zum Vergleichen des angeforderten und vereinbarten Dienstniveaus, wobei, wenn das angeforderte Dienstniveau nicht mit dem vereinbarten Dienstniveau vereinbar ist, das Netzwerkelement dafür ausgelegt ist, (20) ein neues Dienstniveau für das Benutzergerät (6) innerhalb des vereinbarten Dienstniveaus zu bestimmen.

28. Netzwerkelement (20) nach Anspruch 26 oder 27 mit Mitteln zum Steuern von Dienstniveauanforderungen zwischen dem Kommunikationsnetz (30) und dem externen Datennetzwerk (24).

29. Kommunikationsarchitektur, umfassend: ein Kommunikationsnetz (30) zum Unterstützen mindestens eines einem Endbenutzer zugeordneten Benutzergeräts (6) und
einen externen Dienstanbieter (28a), wobei das Benutzergerät (6) dafür ausgelegt ist, über das Kommunikationsnetz (30) mit dem externen Dienstanbieter (28a) zu kommunizieren,
wobei das Kommunikationsnetz (30) ferner ein Netzwerkelement (20) nach einem der Ansprüche 12 bis 28 umfasst.

## Revendications

1. Un procédé de contrôle de conditions de niveau de service entre un réseau de communication (30) et un équipement utilisateur (6) associé à un utilisateur final raccordé au réseau de communication (30), l'équipement utilisateur (6) étant agencé de façon à communiquer avec un fournisseur de services externe (28a) par l'intermédiaire du réseau de communication (30),
**caractérisé en ce que** le procédé comprend la détermination du niveau de service de l'utilisateur final entre le réseau de communication (30) et l'équipement utilisateur (6) en fonction d'une spécification de niveau de service déterminée par le réseau de communication (30) et le fournisseur de services externe (28a).

2. Un procédé selon la revendication 1 dans lequel le niveau de service de l'utilisateur final est déterminé en fonction en outre d'un niveau de service demandé par l'équipement utilisateur (6).

3. Un procédé selon la revendication 2 dans lequel le niveau de service de l'utilisateur final est déterminé en fonction en outre de la disponibilité de ressources dans le réseau de communication (30).

4. Un procédé selon la revendication 3 dans lequel la disponibilité de ressources dans le réseau de communication (30) et le niveau de service demandé par l'équipement utilisateur (6) déterminent un niveau de service initial pour l'équipement utilisateur (6).

5. Un procédé selon la revendication 4 dans lequel le niveau de service initial et le niveau de service convenu déterminent un niveau de service modifié pour l'équipement utilisateur (6).

6. Un procédé selon la revendication 2 dans lequel le niveau de service de l'utilisateur final est modifié selon que le niveau de service demandé se situe en dehors de la plage du niveau de service convenu.

7. Un procédé selon la revendication 1 dans lequel le niveau de service est une qualité de niveau de service.

8. Un procédé selon la revendication 1 dans lequel la spécification de niveau de service déterminée définit un niveau de service en fonction de caractéristiques de flux de données provenant de l'équipement utilisateur (6).

9. Un procédé selon la revendication 1 dans lequel le fournisseur de services externe (28a) est raccordé à un réseau à protocole Internet (24).

10. Un procédé selon la revendication 1 dans lequel le réseau de communication (30) comprend un réseau de services de télécommunication mobile universel.

11. Un procédé selon la revendication 10 dans lequel la condition de niveau de service est définie par un contexte de protocole de données par paquets.

12. Un élément de réseau (20) destiné à contrôler des conditions de niveau de service entre un réseau de communication (30) et un équipement utilisateur (6) associé à un utilisateur final raccordé au réseau de communication (30), l'équipement utilisateur (6) étant agencé de façon à communiquer avec un fournisseur de services externe (28a) par l'intermédiaire du réseau de communication (30),
**caractérisé en ce que** l'élément de réseau (20) comprend :
un moyen de détermination d'un niveau de service d'utilisateur final entre le réseau de communication (30) et l'équipement utilisateur (6) en fonction d'une spécification de niveau de service déterminée par le réseau de communication (30) et le fournisseur de services externe (28a).

13. Un élément de réseau (20) selon la revendication 12 dans lequel l'élément de réseau comprend un noeud de support GPRS passerelle (20), le réseau de communication (30) comprenant en outre un noeud de support GPRS de desserte (16).

14. Un élément de réseau (20) selon la revendication 13 dans lequel le noeud de support GPRS passerelle (20) est raccordé à un réseau de données externe (24) et au noeud de support GPRS de desserte (16).

15. Un élément de réseau (20) selon la revendication 14, dans lequel le réseau de données externe comprend un réseau à protocole Internet (24).

16. Un élément de réseau (20) selon la revendication 15, dans lequel le noeud de support GPRS de desserte (16) est raccordé à l'équipement utilisateur (6).

17. Un élément de réseau (20) selon l'une quelconque des revendications 12 à 16, comprenant un moyen de réception d'une identification d'une qualité de profil de service demandée par l'équipement utilisateur (6).

18. Un élément de réseau (20) selon la revendication 17, comprenant un moyen de détermination s'il existe des ressources suffisantes dans le réseau de communication (30) pour prendre en charge la qualité de profil de service demandée par l'équipement utilisateur (6).

19. Un élément de réseau (20) selon l'une quelconque des revendications 12 à 18, comprenant un moyen d'acceptation d'un contexte de protocole de données par paquets demandé par l'équipement utilisateur (6).

20. Un élément de réseau (20) selon la revendication 19, comprenant un moyen d'identification d'un flux de la session de paquets associée au contexte de protocole de données par paquets.

21. Un élément de réseau selon la revendication 20, comprenant un moyen de détermination si une qualité de profil de service associée à la spécification de niveau de service relative au flux est compatible avec une spécification de qualité de service convenue entre le réseau de communication (30) et l'équipement utilisateur (6).

22. Un élément de réseau (20) selon l'une quelconque des revendications 12 à 21, comprenant un moyen de proposition d'une nouvelle qualité de profil de service uniquement dans les cas où il est clair que l'équipement utilisateur ne devrait pas être autorisé à utiliser une qualité de profil de service qu'il a demandé du fait d'une contradiction avec la spécification de niveau de service.

23. Un élément de réseau (20) selon l'une quelconque des revendications 12 à 16, dans lequel le niveau de service comprend une qualité de niveau de service.

24. Un élément de réseau (20) selon l'une quelconque des revendications 12 à 23, dans lequel le réseau de communication (30) comprend un réseau de services de télécommunication mobile universel.

25. Un élément de réseau (20) selon l'une quelconque des revendications 12 à 24, dans lequel la spécification de niveau de service est liée à un type de flux de paquets dans une session de communication.

26. Un élément de réseau (20) selon l'une quelconque des revendications 12 à 25, comprenant un moyen de réception d'une identification du niveau de service convenu entre le réseau de communication (30) et un réseau de données externe (24).

27. Un élément de réseau (20) selon la revendication 26, comprenant un moyen de comparaison des niveaux de service demandé et convenu, dans lequel, si le niveau de service demandé n'est pas compatible avec le niveau de service convenu, l'élément de réseau (20) est agencé de façon à déterminer un nouveau niveau de service pour l'équipement utilisateur (6) à l'intérieur du niveau de service convenu.

28. Un élément de réseau (20) selon la revendication 26 ou 27, comprenant un moyen de contrôle de conditions de niveau de service entre le réseau de communication (30) et le réseau de données externe (24).

29. Une architecture de communication comprenant un réseau de communication (30) destiné à prendre en charge au moins un équipement utilisateur (6) associé à un utilisateur final, et
un fournisseur de services externe (28a), l'équipement utilisateur (6) étant agencé de façon à communiquer avec le fournisseur de services externe (28a) par l'intermédiaire du réseau de communication (30),
le réseau de communication (30) comprenant en outre un élément de réseau (20) selon l'une quelconque des revendications 12 à 28.
